# EUROPÄISCHE PATENTSCHRIFT

(11) **EP 0 714 731 B1**
(45) Veröffentlichungstag und Bekanntmachung des Hinweises auf die Patenterteilung: **16.02.2000**
(21) Anmeldenummer: 95118399.5
(22) Anmeldetag: 23.11.1995
(51) Int. Cl.: B23Q 3/10, F16B 37/04

(54) **Nutenstein für Spannwerkzeuge**
Nut for slots in a clamping tool
Ecrou pour rainures pour outil de serrage

(30) Priorität: 01.12.1994 DE 4442802
(43) Veröffentlichungstag der Anmeldung: 05.06.1996
(73) Patentinhaber: Shanview Patents Limited, Sandymount, Dublin 4 (IE)
(72) Erfinder: Lenzkes, Thomas, Beverly Height, Dublin 16 (IE)
(74) Vertreter: Rehberg, Elmar, Dipl.-Ing.

(56) Entgegenhaltungen:
- EP-A- 0 391 346
- EP-A- 0 613 757
- US-A- 2 372 716
- SOVIET INVENTIONS ILLUSTRATED Section PQ, Week 8303 2.März 1983 Derwent Publications Ltd., London, GB; Class P56, AN A8857K & SU-A-908 566 (BURENIN) , 28.Februar 1982

## Beschreibung

Die Erfindung betrifft einen Nutenstein zum Festspannen eines Spannwerkzeuges auf einer zumindest eine T-nutenförmige Ausnehmung aufweisenden Unterlage, insbesondere einem Spanntisch, mit einem unrunde Querschnittsgestalt aufweisenden Sockel, der an die Breite des Nutenhalses der T-nutenförmigen Ausnehmungen angepaßt ist, mit einer Spannplatte, die ein Paar gegenüber dem Sockel vorstehender Verankerungsfortsätze in symmetrischer Anordnung aufweist und mit diesem Paar von Verankerungsfortsätzen an die Breite im Nutgrund der T-nutenförmigen Ausnehmungen angepaßt ist. Der Nutenstein kann eine den Sockel und die Spannplatte durchsetzende Gewindebohrung zum Eingriff einer Befestigungsschraube aufweisen. Solche Nutensteine können Bestandteil einer Vorrichtung zum Festspannen eines Werkstückes auf einem Spanntisch sein. Sie dienen dazu, die Spannvorrichtung auf der Unterlage, insbesondere dem Spanntisch, festzuspannen. Der Spanntisch ist von entsprechenden T-nutenförmigen Ausnehmungen durchzogen, wobei die Geometrie des Nutensteins an die Geometrie der T-nutenförmigen Ausnehmungen des Spanntischs angepaßt ist. Der Nutenstein kann jedoch auch in anderer Weise zum Festspannen eingesetzt werden. Die Erfindung kann auch an einer T-Nuten-Schraube verwirklicht werden, also an einer Schraube, deren Kopf entsprechend ausgebildet ist und in die T-nutenförmige Ausnehmung eingreift. Die Erfindung bezieht sich somit allgemein auf ein Befestigungselement zum Eingriff in eine Nute, obwohl sie nachfolgend am Beispiel des Nutensteins erläutert wird.

Bekannte Nutensteine weisen einen Grundkörper auf, der von einer Gewindebohrung durchsetzt wird, die für den Eingriff einer Befestigungsschraube bestimmt ist. Der Grundkörper besitzt einen Sockel, der sich in in einem unteren Bereich angeordneten Verankerungsfortsätzen verbreitert, die in den Grund der T-nutenförmigen Ausnehmung eingreifen, während der Sockel zwischen den Randbereichen der Nut, also dem Nutenhals, zu liegen kommt. Die T-nutenförmigen Ausnehmungen weisen unterschiedliche Geometrie, insbesondere unterschiedliche Größe auf, wobei die Halsweite der T-nutenförmigen Ausnehmung und die Breite der Nut im Nutgrund in gewisser Relation zueinander stehen. Jedoch sind für T-nutenförmige Ausnehmungen unterschiedlicher Größe auch unterschiedliche Nutensteine erforderlich, die in der Ausbildung des Sockels, also der Sockelbreite und der Breite der Verankerungsfortsätze aufeinander abgestimmt sind.

Ein Nutenstein der eingangs beschriebenen Art ist aus der EP 0 391 346 B1 bekannt. Er wird in Verbindung mit einer Spannvorrichtung zum Festspannen eines Werkstückes eingesetzt. Der Nutenstein besitzt einen Sockel, der in der Regel die Verdrehsicherheit des Nutensteins im Nutenhals erbringt. Unterhalb des Sockels ist eine Spannplatte vorgesehen, die an zwei gegenüberliegenden Stellen gegenüber dem Sockel vorsteht und so ein Paar von Verankerungsfortsätzen bildet. Diese Verankerungsfortsätze greifen in den Grund der T-nutenförmigen Ausnehmung in der Unterlage, insbesondere in einem Spanntisch, ein. Dieser bekannte Nutenstein ist nur für eine T-nutenförmige Ausnehmung mit feststehender entsprechender Geometrie anwendbar. Wenn ein Werkstück beispielsweise auf einem anderen Spanntisch gespannt werden soll, welcher T-nutenförmige Ausnehmungen mit einer anderen Geometrie besitzt, kann der vorliegende Nutenstein nicht benutzt werden, sondern muß durch einen Nutenstein der anderen Abmessung ersetzt werden. So ist es üblich, daß beim Bearbeiten von Werkstücken, insbesondere an spanenden Werkzeugmaschinen, verschiedene Sätze von Nutensteinen unterschiedlicher geometrischer Ausbildung vorrätig zu halten sind, die dann wahlweise eingesetzt werden. Der Aufwand und die Bevorratung ist entsprechend. Auch das Umrüsten der Spannwerkzeuge erfordert Zeit.

Die US-PS 2,372,716 zeigt einen Nutenstein zum Positionieren eines Werkstückes auf einer mit einer T-nutenförmigen Ausnehmung versehenen Unterlage. Zu diesem Zweck wird ein Nutenstein eingesetzt, der jedoch nicht mit der Unterlage, sondern mit dem Werkstück durch eine Befestigungsschraube verbunden wird. Der Nutenstein weist als einstückiger Körper zwei übereinander befindliche Querschnittsbereiche auf. Der Querschnitt mit der größeren Breite greift dabei in das Werkstück ein, während der Querschnitt mit der geringeren Breite in den Nutenhals eine T-nutenförmigen Ausnehmung eingesteckt wird. Dieser letztere Querschnitt ist etwa sechseckig gestaltet und besitzt drei unterschiedliche Breiten, so daß das Werkstück in drei T-nutenförmige Ausnehmungen mit unterschiedlich breiten Nutenhälsen lose einsetzbar ist. Mit diesem Nutenstein ist es möglich, ein Werkstück auf einer Unterlage lose zu positionieren und an einer Verdrehung um eine Hochachse zu hindern. Ein Festspannen eines Werkstückes auf der Unterlage ist damit nicht möglich.

Der Erfindung liegt die Aufgabe zugrunde, einen Nutenstein der eingangs beschriebenen Art bereitzustellen, der in mehreren T-nutenförmigen Ausnehmungen, mindestens in zwei solcher Ausnehmungen, seine Funktion erfüllen kann. Es soll damit ein Nutenstein geschaffen werden, mit dem gewisse Größenbereiche T-nutenförmiger Ausnehmungen bedient werden können.

Erfindungsgemäß wird dies bei einem Nutenstein der eingangs beschriebenen Art dadurch erreicht, daß die Spannplatte ein weiteres Paar Verankerungsfortsätze aufweist, daß der Sockel an die Breite des Nutenhalses von mindestens einer weiteren T-nutenförmigen Ausnehmung mit unterschiedlicher Breite angepaßt ist, und daß die Spannplatte mit dem weiteren Paar von Verankerungsfortsätzen an die Breite im Nutgrund der weiteren T-nutenförmigen Ausnehmung mit unterschiedlicher Breite angepaßt ist.

Die Erfindung geht von dem Gedanken aus, die Spannplatte entlang ihres Umfanges unterschiedlich auszubilden und dabei mindestens ein weiteres Paar Verankerungsfortsätze zu realisieren, die sich hinsichtlich ihrer geometrischen Abmessungen von dem ersten Paar Verankerungsfortsätze unterscheiden, so daß der Nutenstein wahlweise in die eine oder andere T-nutenförmige Ausnehmung einsetzbar ist. Sicherlich können mit diesem neuen Nutenstein nicht sämtliche T-förmigen Ausnehmungen bedient werden, immerhin aber lassen sich einige Ausnehmungen - mindestens zwei - damit überbrücken, so daß sich in dieser einfachsten Ausführungsform bereits die Anzahl der auf Vorrat zu haltenden Nutensteine halbiert. Der Gedanke kann natürlich auch mehrfach erweitert werden, wobei dann - zumindest bereichsweise - ein Universal-Nutenstein entsteht, der T-förmige Ausnehmungen in einem gewissen Bereich abzudecken in der Lage ist.

Insbesondere kann der Sockel rechteckige Umrißgestaltung aufweisen, wobei die beiden Paare von Verankerungsfortsätzen an der Spannplatte bezüglich der Achse der Gewindebohrung um einen Winkel von 90° gegeneinander gedreht vorgesehen sind. Damit kann auch der Sockel in beiden Anwendungsfällen als Verdrehsicherung dienen, und es ergibt sich die volle Tragfähigkeit des Nutensteins in beiden Relativlagen.

Die Spannplatte kann aber auch bezüglich der Achse sich entgegen der Festdrehrichtung der Befestigungsschraube radial verbreiternde Umfangsbereiche aufweisen. Damit wird ein Universal-Nutenstein geschaffen, der über einen bestimmten Größenbereich von Nuten anwendbar ist. Dieser Nutenstein kann den Vorteil besitzen, daß er zumindest in einige der bedienbaren Nuten auch von oben her einsetzbar ist, so daß es bei besonders langen Nuten nicht erforderlich ist, den Nutenstein seitlich einzuschieben und bis zur Befestigungsstelle zu befördern. Beim Anziehen der Befestigungsschraube wird gleichsam eine gewisse Automatik erzielt. Solange der Nutenstein mit seiner Gewindebohrung ausschließlich Kontakt zu der Befestigungsschraube hat, reicht diese Haftung aus, um beim Anziehen der Befestigungsschraube den Nutenstein in der Nut querzustellen, jedenfalls soweit, bis seine entsprechenden Bereiche seitlich am Grunde der Nut zur Anlage kommen. Dies ist zugleich die sinnvollste Verankerungsstellung für den Nutenstein, und beim weiteren Anziehen der Befestigungsschraube wird der feste Sitz erreicht. Umgekehrt gestaltet sich das Lösen des Nutensteins, indem die Befestigungsschraube nach der anderen Seite, also in Losdrehrichtung, verdreht wird. Auch dabei wird nach dem Lösen der Nutenstein wieder mitgenommen.

Besonders vorteilhaft ist es, wenn eines der beiden Paare von Verankerungsfortsätzen an die Geometrie einer T-nutenförmigen Ausnehmung eines Führungsschuhs einer Vorrichtung zum Festspannen eines Werkstücks angepaßt ist. Hierdurch ergibt sich dann der besondere Vorteil, daß eine solche Vorrichtung zum Festspannen mit ihrem Führungsschuh nicht nur auf der Unterlage, beispielsweise dem Spanntisch, festspannbar ist, sondern es ergibt sich die Möglichkeit, mehrere Führungsschuhe übereinander zu türmen und gegenseitig festzuspannen, so daß damit in einfacher Weise eine Möglichkeit gegeben ist, die Spannhöhe der Vorrichtung zum Festspannen eines Werkstücks an die Werkstückhöhe anzupassen. In diesem Falle können die geometrischen Abmessungen der beiden Paare von Verankerungsfortsätzen relativ weit auseinander liegen, d. h. sich erheblich unterscheiden, weil die T-förmigen Ausnehmungen in einem Spanntisch in der Regel kleiner bemessen sind als die T-förmigen Ausnehmungen in einem Führungsschuh.

Der Führungsschuh weist zueinander parallele Aufsetzflächen auf, so daß die Führungsschuhe unmittelbar übereinander festgespannt werden können.

Der Führungsschuh weist mindestens eine T-nutenförmige Ausnehmung auf. Er kann aber auch zwei oder noch mehr solcher T-nutenförmiger Ausnehmungen besitzen.

Der Nutenstein kann aber auch als Nutenschraube ausgebildet sein, die mit einem Gewindeschaft versehen ist und deren Kopf den Sockel und die Spannplatte trägt. Hierzu gehört dann eine Mutter mit einem dem Außengewinde des Gewindeschaftes angepassten Innengewinde, um beispielsweise so einen Führungsschuh auf einer Unterlage festzuspannen.

Die Erfindung wird anhand bevorzugter Ausführungsbeispiele weiter erläutert und beschrieben. Es zeigen:
- Figur 1: eine Vorrichtung zum Festspannen eines Werkstückes auf einer Unterlage in perspektivischer Darstellung,
- Figur 2: eine Draufsicht auf eine erste Ausführungsform des Nutensteins,
- Figur 3: eine Draufsicht auf eine weitere Ausführungsform des Nutensteins,
- Figur 4: eine Draufsicht auf eine weitere Ausführungsform des Nutensteins,
- Figur 5: eine Stirnansicht zweier Führungsschuhe übereinander, festgespannt an einem Spanntisch,
- Figur 6: verschiedene Draufsichten auf einen weiteren Nutenstein, jeweils eingesetzt in unterschiedlich breite Nuten und
- Figur 7: einen Nutenstein in Form einer Nutenschraube in zwei Ansichten.

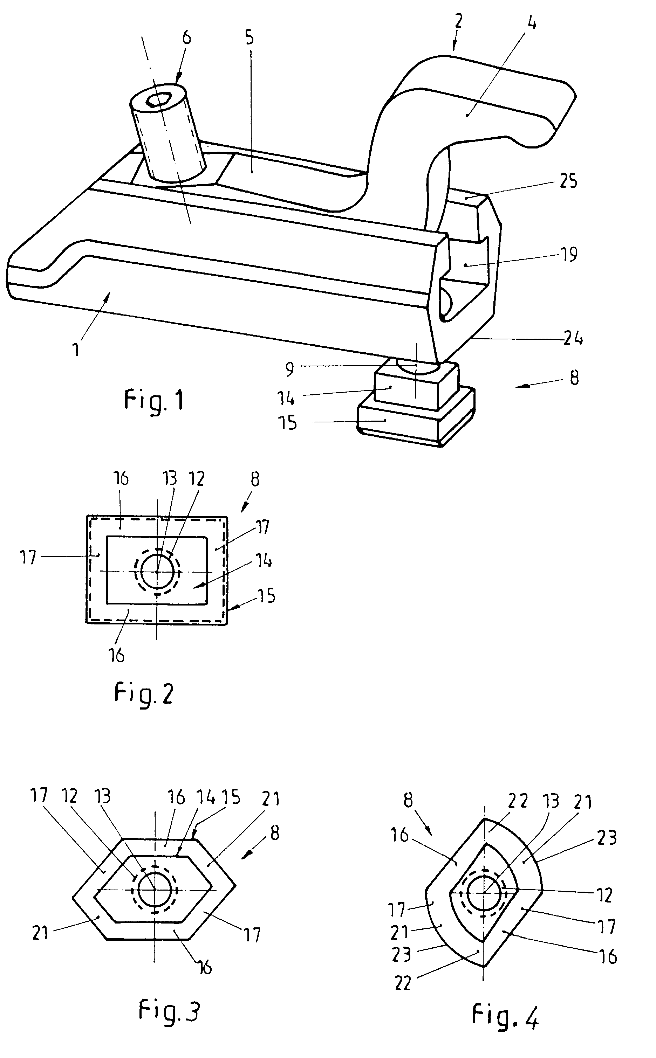

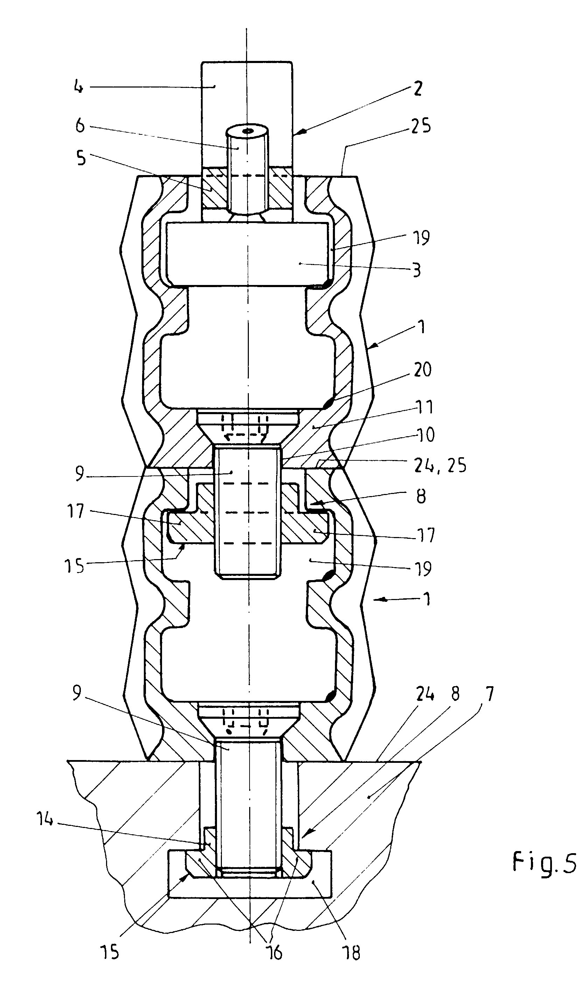

In Figur 1 ist eine Vorrichtung zum Festspannen eines Werkstückes auf einer Unterlage perspektivisch dargestellt. Die Spannvorrichtung weist als wesentliche Elemente einen Führungsschuh 1 und einen Spannhebel 2 auf. Der Spannhebel 2 ist nach Art eines Kipphebels ausgebildet und etwa in seinem Mittelbereich schwenkbar an einer Lagerplatte 3 (Figur 5) gelagert. Der Spannhebel 2 weist einen Klemmschenkel 4 auf, mit dem das Werkstück auf der Unterlage, beispielsweise dem Spanntisch, festgespannt wird. Der Spannhebel 2 besitzt ansonsten von seinem Lager aus gesehen nach rückwärts einen Spannschenkel 5, dessen freies Ende von einer Spannschraube 6 durchsetzt wird, die sich in der Spannstellung auf der Lagerplatte 3 abstützt. Durch Anziehen der Spannschraube 6 erfolgt das Festspannen des Werkstückes, indem der Spannhebel 2 um sein mittig angeordnetes Lager verschwenkt.

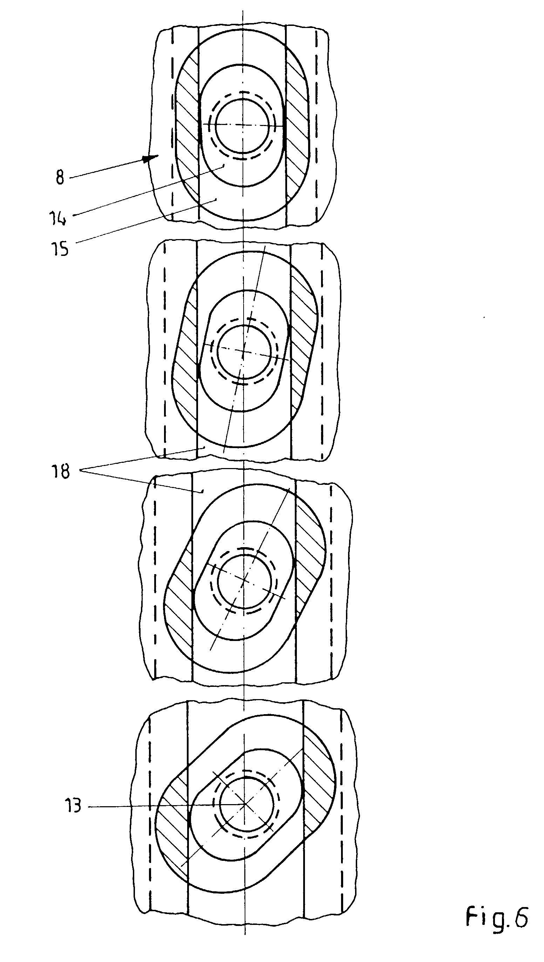

Zur Befestigung des Führungsschuhs 1 der Vorrichtung an einer Unterlage, beispielsweise einem Spanntisch 7 (Figur 6) dient ein Nutenstein 8, dem eine Befestigungsschraube 9 zugeordnet ist, die eine entsprechend gestaltete Bohrung 10 im Bereich des Bodens 11 des Führungsschuhs 1 durchsetzt und sich dort an einer kegeligen Fläche abstützt. Die Befestigungsschraube 9 greift in eine Gewindebohrung 12 in dem Nutenstein 8 ein. Die Gewindebohrung 12 kann durchgehend, aber auch als Sackbohrung ausgebildet sein.

Der Nutenstein 8 besitzt zentrisch zu seiner vertikalen Achse 13 die Gewindebohrung 12. In seinem oberen Bereich ist ein Sockel 14 vorgesehen, der bei der Ausführungsform der Figuren 1 und 2 rechteckige Gestalt besitzt. Unterhalb des Sockels 14 befindet sich eine Spannplatte 15. Der Sockel 14 und die Spannplatte 15 sind einstückig ausgebildet. Auch die Spannplatte 15 besitzt bei der Ausführungsform der Figuren 1 und 2 rechteckigen Umriß und bildet gegenüber dem Sockel ein erstes Paar Verankerungsfortsätze 16. Die Spannplatte 15 steht jedoch nicht nur nach diesen beiden entgegengesetzten Richtungen gegenüber dem Sockel 14 vor, sondern auch noch in einer um 90° um die Achse 13 gedrehten Stelle. Dort ist ein zweites Paar Verankerungsfortsätze 17 gebildet. Die beiden Paare der Verankerungsfortsätze 16 und 17 besitzen unterschiedliche geometrische Abmessungen, so daß der Nutenstein 8 einmal in seiner Längsrichtung und einmal um 90° gedreht in seiner Querrichtung in eine T-nutenförmige Ausnehmung einsetzbar ist. Das Ausführungsbeispiel der Figuren 1 und 2 ist in Verbindung mit der Darstellung der Figur 6 zu sehen. Der Spanntisch 7 weist eine T-nutenförmige Ausnehmung 18 auf, in die der Nutenstein 8 so eingesetzt ist, daß das Paar Verankerungsfortsätze 16 entsprechend der Ausbildung der Ausnehmung 18 einsetzbar ist und seine Funktion erfüllt. Durch Anziehen der unteren Befestigungsschraube 9 wird ein Führungsschuh 1 auf dem Spanntisch 7 festgespannt. Figur 5 läßt aber noch einen weiteren Führungsschuh 1 in identischer Ausbildung erkennen, der auf dem festgespannten Führungsschuh 1 aufgesetzt und ebenfalls festgespannt ist. Hierzu dient der Nutenstein 8 mit seiner Befestigungsschraube 9. Dieser Nutenstein 8 ist um 90° gedreht in eine (obere) T-nutenförmige Ausnehmung 19 im unteren Führungsschuh 1 eingesetzt, so daß das Paar Verankerungsfortsätze 17 des Nutensteins 8 hier ihre Funktion erfüllen. In die obere T-nutenförmige Ausnehmung 19 des oberen Führungsschuhs 1 ist die Lagerplatte 3 mit dem Spannhebel 2 eingeschoben, so daß der Klemmschenkel 4 mit seinem vorderen Ende in einer Stellung ist, in der er ein relativ hoch ausgebildetes Werkstück, welches auf der Oberfläche des Spanntisches 7 aufliegt, festspannen kann. Während Figur 5 gleichsam eine zweistöckige Ausbildung des Führungsschuhs 1 zeigt, ist ebenso leicht vorstellbar, wie mehrere Führungsschuhe 1 gemäß Figur 1, also in einstöckiger Ausbildung, übereinander festgespannt werden können. Um das Herausschieben der Lagerplatte 3 nach vorn, also in Richtung auf das zu spannende Werkzeug, zu begrenzen, kann im vorderen Bereich der Ausnehmung 19 ein Schweißpunkt 20 oder ein anderes Hindernis vorgesehen sein.

Die Ausführungsform des Nutensteins gemäß Figur 3 baut auf sechseckigem Umriß des Sockels 14 und der Spannplatte 15 auf. Es sind hier somit drei Paare von Verankerungsfortsätzen 16, 17, 21 realisiert, so daß dieser Nutenstein 8 in mindestens drei unterschiedlich dimensionierte Ausnehmungen 18 bzw. 19 einsetzbar ist.

Der Nutenstein 8 gemäß Figur 4 stellt einen Universal-Nutenstein dar. Dieser besitzt radial zu seiner Achse 13 entgegen der Festdrehrichtung der Befestigungsschraube 9 radial sich verbreiternde Umfangsbereiche 23, so daß hier nacheinander mehrere Paare von Verankerungsfortsätzen 16, 17, 21, 22 gebildet sind. Es ist ein gleichsam stufenloser Übergang vorgesehen. Ein solcher Nutenstein 8 läßt sich zumindest in einige der Ausnehmungen auch von oben einsetzen und durch Drehen der Befestigungsschraube 9 so um seine Achse 13 mitnehmen, daß je nach der Breite der Ausnehmung 18 bzw. 19 im Nutgrund die Spannplatte 15 und/oder der Sockel 14 - bei entsprechender ähnlicher Gestaltung - anschlagen. Auf diese Art und Weise ist der Hals der Ausnehmung 18, 19 hintergriffen, und die Verankerungsfortsätze können ihre Wirkung erfüllen. Die Führungsschuhe 1 weisen parallel ausgebildete Aufsetzflächen 24 und 25 auf.

In Figur 6 ist ein weiterer Nutenstein 8 in Verbindung mit unterschiedlich breiten Nuten dargestellt. Der Nutenstein 8 besitzt einen eliptisch abgerundeten Sockel 14 und eine Spannplatte 15 mit ähnlicher Formgebung, die über den Umfang gegenüber dem Sockel 14 vorsteht. Beim Einsetzen und Festspannen in unterschiedlich breite Ausnehmungen 18 ist es der Sockel 14, der an den Seitenwänden der Nuten zum Anschlag kommt und damit die Verankerungsdrehbewegung begrenzt. Es ist ersichtlich, daß dieser Nutenstein für eine ganze Reihe von Nuten unterschiedlicher Breite in einem gewissen Breitenbereich eingesetzt werden kann. Zur Verdeutlichung sind die einander überdeckenden Flächen, an denen die Kraftübertragung stattfindet, schraffiert hervorgehoben.

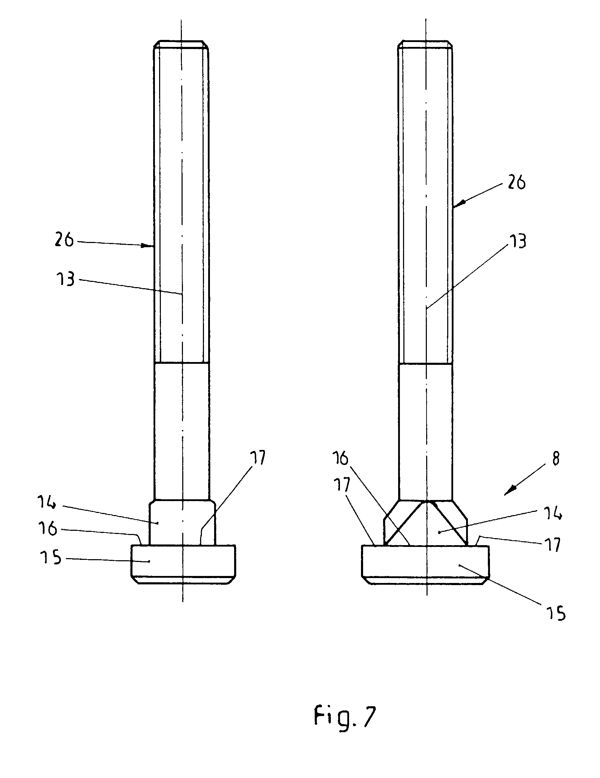

In Figur 7 ist ein Nutenstein 8 in Form einer Nutenschraube dargestellt. An dem Kopf der Nutenschraube sind der Sockel 14 und die Spannplatte 15 verwirklicht, die - wie aus den beiden Ansichten zu ersehen - die beiden Paare von Verankerungsfortsätzen 16 und 17 trägt. Auch der Sockel 14 ist an zwei unterschiedlich breite T-nutenförmige Ausnehmungen in einer Unterlage, insbesondere einem Spanntisch, angepasst. Die Nutenschraube besitzt weiterhin einen Gewindeschaft 26, der mindestens auf einem Teil seiner axialen Länge mit einem Außengewinde versehen ist.

### BEZUGSZEICHENLISTE

- 1 -: Führungsschuh
- 2 -: Spannhebel
- 3 -: Lagerplatte
- 4 -: Klemmschenkel
- 5 -: Spannschenkel
- 6 -: Spannschraube
- 7 -: Spanntisch
- 8 -: Nutenstein
- 9 -: Befestigungsschraube
- 10 -: Bohrung

- 11 -: Boden
- 12 -: Gewindebohrung
- 13 -: Achse
- 14 -: Sockel
- 15 -: Spannplatte
- 16 -: Verankerungsfortsatz
- 17 -: Verankerungsfortsatz
- 18 -: Ausnehmung
- 19 -: Ausnehmung
- 20 -: Schweißpunkt

- 21 -: Verankerungsfortsatz
- 22 -: Verankerungsfortsatz
- 23 -: Umfangsbereich
- 24 -: Aufsetzfläche
- 25 -: Aufsetzfläche
- 26 -: Gewindeschaft

## Patentansprüche

1. Nutenstein (8) zum Festspannen eines Spannwerkzeuges auf einer zumindest eine T-nutenförmige Ausnehmung (18) aufweisenden Unterlage, insbesondere einem Spanntisch (7), mit einem unrunde Querschnittsgestalt aufweisenden Sockel (14), der an die Breite des Nutenhalses der T-nutenförmigen Ausnehmungen (18) angepaßt ist, mit einer Spannplatte (15), die ein Paar gegenüber dem Sockel (14) vorstehender Verankerungsfortsätze (16) in symmetrischer Anordnung aufweist und mit diesem Paar von Verankerungsfortsätzen an die Breite im Nutgrund der T-nutenförmigen Ausnehmungen (18) angepaßt ist, **dadurch gekennzeichnet**, daß die Spannplatte (15) ein weiteres Paar Verankerungsfortsätze (17) aufweist, daß der Sockel (14) an die Breite des Nutenhalses von mindestens einer weiteren T-nutenförmigen Ausnehmung (19) mit unterschiedlicher Breite angepaßt ist, und daß die Spannplatte (15) mit dem weiteren Paar von Verankerungsfortsätzen an die Breite im Nutgrund der weiteren T-nutenförmigen Ausnehmung (19) mit unterschiedlicher Breite angepaßt ist.

2. Nutenstein nach Anspruch 1, **dadurch gekennzeichnet**, daß der Sockel (14) rechteckige Umrißgestaltung aufweist und daß die beiden Paare von Verankerungsfortsätzen (16, 17) an der Spannplatte (15) bezüglich der Achse (13) der Gewindebohrung (12) um einen Winkel von 90° gegeneinander gedreht vorgesehen sind.

3. Nutenstein nach Anspruch 1, **dadurch gekennzeichnet**, daß die Spannplatte (15) bezüglich der Achse (13) sich entgegen der Festdrehrichtung der Befestigungsschraube (9) radial verbreiternde Umfangsbereiche (23) aufweist.

4. Nutenstein nach Anspruch 3, **dadurch gekennzeichnet**, daß auch der Sockel (14) bezüglich der Achse (13) sich entgegen der Festdrehrichtung der Befestigungsschraube (9) radial verbreiternde Umfangsbereiche aufweist.

5. Nutenstein nach Anspruch 1 oder 2, **dadurch gekennzeichnet,** daß eines der beiden Paare von Verankerungsfortsätzen (17) an die Geometrie einer T-nutenförmigen Ausnehmung (19) eines Führungsschuhs (1) einer Vorrichtung zum Festspannen eines Werkstücks angepaßt ist.

6. Nutenstein nach einem der Ansprüche 1 bis 5, **dadurch gekennzeichnet,** daß der Nutenstein als Nutenschraube ausgebildet ist, die mit einem Gewindeschaft (26) versehen ist und deren Kopf den Sockel (14) und die Spannplatte (15) trägt.

## Claims

1. A sliding block (8) for securely clamping a clamping tool on a support surface including at least one T-slot-shaped opening (18), especially a clamping table (7), including
a base (14) having a noncircular cross section and being adapted to the width of the slot neck of the T-slot-shaped opening (18),
a clamping plate (15) including a pair of symmetrically arranged anchor protrusions (16) projecting with respect to the base (14), the clamping plate (15) with the pair of anchor protrusions (16) being adapted to the width of the slot base of the T-slot-shaped opening (18), **characterised** in that
the clamping plate (15) includes a second pair of anchor protrusions (17),
the base (14) is adapted to the width of the slot neck of at least one second T-slot-shaped opening (19) having a different width, and
the clamping plate (15) with the second pair of anchor protrusions (17) is adapted to the width of the slot base of the second T-slot-shaped opening (19) having a different width.

2. The sliding block of claim 1, **characterised** in that the base (14) has a rectangular outline, and that the two pairs of anchor protrusions (16, 17) are arranged on the clamping plate (15) to be turned with respect to one another at an angle of 90° with respect to the axis (13) of the threaded bore (12).

3. The sliding block of claim 1, **characterised** in that the clamping plate (15) includes circumferential regions (23) radially widening with respect to the axis (13) in an opposite direction to the tightening direction of the fastening bolt (9).

4. The sliding block of claim 3, **characterised** in that the base (14) also includes circumferential regions radially widening with respect to the axis (13) in an opposite direction to the tightening direction of the fastening bolt (9).

5. The sliding block of claim 1 to 2, **characterised** in that one of the two pairs of anchor protrusions (17) is adapted to the geometry of a T-slot-shaped opening (19) of a guide shoe (1) of an apparatus for securely clamping a workpiece.

6. The sliding block of one of claim 1 to 5, **characterised** in that the sliding block is designed as slot screw including a shank and the head of which carries the base (14) and the clamping plate (15).

## Revendications

1. Ecrou pour rainures (8) pour la fixation d'un outil de serrage sur une base présentant au moins un évidement en forme de rainure en T (18), en particulier sur une table de serrage (7), écrou avec un socle (14) de section transversale non circulaire adapté à la largeur du col de la rainure des évidements en forme de rainure en T (18), avec une plaque de serrage (15) qui présente une paire d'épaulements d'ancrage (16) faisant saillie sur le socle (14) disposés symétriquement, cette plaque s'adaptant grâce à la paire d'épaulements d'ancrage à la largeur du fond des évidements en forme de rainures en T (18),
caractérisé
en ce que la plaque de serrage (15) présente une paire d'épaulements d'ancrage supplémentaire (17),
en ce que le socle (14) s'adapte à la largeur du col de la rainure d'au moins un évidement supplémentaire en forme de rainure en T (19) d'une largeur différente
et en ce que la plaque de serrage (15) s'adapte au moyen de la paire supplémentaire d'épaulements d'ancrage à la largeur du fond de l'évidement supplémentaire en forme de rainure en T (19) qui est d'une largeur différente.

2. Ecrou pour rainures suivant la revendication 1
caractérisé
en ce que le socle (14) présente un contour rectangulaire et en ce qu'il prévu que les deux paires d'épaulements d'ancrage (16, 17) sont décalées sur la plaque de serrage (15) d'un angle de 90° autour de l'axe (13) de la forure filetée (12).

3. Ecrou pour rainures suivant la revendication 1
caractérisé
en ce que la plaque de serrage (15) présente des zones périphériques (23) s'élargissant radialement à partir de l'axe (13) dans un sens opposé au sens de serrage de la vis de fixation (9).

4. Ecrou pour rainures suivant la revendication 3
caractérisé
en ce que le socle (14) présente également des zones périphériques (23) s'élargissant radialement à partir de l'axe (13) dans un sens opposé au sens de serrage de la vis de fixation (9) .

5. Ecrou pour rainures suivant la revendication 1 ou la revendication 2
caractérisé
en ce que l'une des deux paires d'épaulements d'ancrage (17) est configurée en fonction de la géométrie d'un évidement en forme de rainure en T (19) du sabot de guidage (1) d'un dispositif destiné au serrage d'une pièce de travail.

6. Ecrou pour rainures suivant l'une quelconque des revendications 1 à 5
caractérisé
en ce que l'écrou pour rainures a la forme d'une vis à rainures pourvue d'une tige filetée (26) et dont la tête porte le socle (14) et la plaque de serrage (15).
